Europäisches Patentamt

**European Patent Office**

Office européen des brevets

(19)

(11) Veröffentlichungsnummer : **0 030 921**
**B1**

(12) **EUROPÄISCHE PATENTSCHRIFT**

(45) Veröffentlichungstag der Patentschrift :
16.11.83

(21) Anmeldenummer : **80810382.4**

(22) Anmeldetag : **11.12.80**

(51) Int. Cl.³ : **B 01 D 53/04**// B01D53/02,
B01J20/10, B01J20/34

(54) **Verfahren zur Abtrennung von Nitrobenzol, Di- und/oder Trichlorbenzol aus Abluftdämpfen.**

(30) Priorität : **17.12.79 CH 11160/79**

(43) Veröffentlichungstag der Anmeldung :
**24.06.81 Patentblatt 81/25**

(45) Bekanntmachung des Hinweises auf die Patenterteilung : **16.11.83 Patentblatt 83/46**

(84) Benannte Vertragsstaaten :
**CH DE FR GB LI SE**

(56) Entgegenhaltungen
**DE A 1 667 568**
**DE B 1 296 723**
**DE C 554 209**
**DE C 658 109**
**DE C 699 397**
**FR A 975 640**
**US A 1 429 856**

**ULLMANNS ENCYKLOPÄDIE DER TECHNI-
SCHEN CHEMIE, 4. Auflage, Band 2, 1972, Verlag
Chemie WEINHEIM (DE) Seiten 602, 603, 605**

**ULLMANNS ENCYKLOPÄDIE DER TECHNI-
SCHEN CHEMIE, 4. Auflage, Band 17, 1979,
Verlag Chemie, WEINHEIM (DE) Seite 393**

**ULLMANNS ENCYKLOPÄDIE DER TECHNI-
SCHEN CHEMIE, 4. Auflage, Band 9, 1975 WEIN-
HEIM (DE) Seite 509**

(73) Patentinhaber : **CIBA-GEIGY AG**
**Patentabteilung Postfach**
**CH-4002 Basel (CH)**

(72) Erfinder : **Bentz, Rolf, Dr.**
**Haltingerstrasse 75**
**CH-4057 Basel (CH)**
Erfinder : **Fattinger, Volker, Dr.**
**Im Lee 39**
**CH-4144 Arlesheim (CH)**

(56) Entgegenhaltungen :
**ULLMANNS ENCYKLOPÄDIE DER TECHNI-
SCHEN CHEMIE, 3. Auflage, Band 15, 1964,
Urban + Schwarzenberg MÜNCHEN (DE) Seiten
716-725**

*Die Akte enthält technische Angaben, die nach dem
Eingang der Anmeldung eingereicht wurden und die
nicht in dieser Patentschrift enthalten sind.*

# 0 030 921

## Verfahren zur Abtrennung von Nitrobenzol, Di- und/oder Trichlorbenzol aus Abluftdämpfen

Die vorliegende Erfindung betrifft ein Verfahren zur Abtrennung von Nitrobenzol, Di- und/oder Trichlorbenzol aus im wesentlichen ungetrockneten Abluftdämpfen durch Adsorption an Kieselgel.

Industrieabgase, Abluft von Raumentlüftungen in chemischen oder medizinischen Laboratorien oder auch in Putzereien enthalten häufig mehr oder weniger grosse Mengen an organischen Lösungsmitteldämpfen. Die ungehinderte Abgabe an die Aussenluft wirft einerseits beträchtliche ökologische Probleme auf, andererseits fällt der auf diese Weise mögliche Verlust von grösseren Lösungsmittelmengen wirtschaftlich ins Gewicht. Es ist daher in zunehmendem Masse notwendig, die in der Abluft enthaltenen Lösungsmitteldämpfe zurückzuhalten und der Wiederverwendung zuzuführen.

In der Regel wird in bekannten Verfahren die Abluft über ein festes Adsorbens geleitet, das im bisher technisch angewendeten Prozessen praktisch ausschliesslich aus Aktivkohle bestand. Siehe dazu beispielsweise die deutschen Offenlegungsschriften DE-A 27 35 568 und DE-A-29 01 894. Trotz der bisher grossen Verbreitung von Aktivkohle als Adsorptionsmittel weist diese auch einige Nachteile auf. Einerseits ist im Falle von mit organischen Lösungsmitteln (die oft einen sehr tiefen Flamm punkt aufweisen) beladener Aktivkohle die Sicherheit der Anlage nicht voll gewährleistet. Andererseits ist auch das Verhältnis zwischen maximaler Beladung der Aktivkohle und der Restbeladung nach der Regenerierung nicht optimal.

Die DE-C-554 209 beschreibt ein Verfahren zur separaten Gewinnung von Dämpfen und Gasen aus feuchten gasförmigen Kohlenwasserstoffgemischen durch getrennte Adsorption in Kombinationen hydrophiler und hydrophober Adsorptionsmittel oder solcher verschiedener Porenweite und durch getrennte Regeneration der Adsorptionsmittel. Als hydrophiles Adsorptionsmittel wird vorzugsweise Kieselsäuregel verwendet.

Ein ähnliches Verfahren beschreibt die DE-B-1 296 723, worin, Wasser, Propan und schwerere Kohlenwasserstoffe aus einem Erdgasstrom abgetrennt werden, indem man den Strom durch ein oxydisches, vorzugsweise siliciumdioxydhaltiges, Adsorbens leitet. Bei beiden Verfahren handelt es sich um unpolare organische Verbindungen, die durch Adsorption an vorzugsweise siliciumdioxydhaltige Adsorbentien aus einem Gas- bzw. Dampfgemisch abgetrennt werden, während die Abtrennung von polaren organischen Verbindungen, darunter von Nitrobenzol, Di- und/oder Trichlorbenzol, aus Abluftdämpfen gewöhnlich an Aktivkohle erfolgt.

Es wurde nun gefunden, dass sich siliciumdioxydhaltige Verbindungen, insbesondere Kieselgel, ausgezeichnet zur Adsorption der in meist feuchten Abluftdämpfen enthaltenen polaren organischen Verbindungen Di- und/oder Trichlorbenzol und besonders Nitrobenzol eignet und sich diese Verbindungen auch wieder leicht und in hohen Ausbeuten aus den Adsorbentien durch Heissluft und besonders Wasserdampf austreiben lassen.

Das erfindungsgemässe Verfahren zur Abtrennung von Nitrobenzol, Di- und/oder Trichlorbenzol aus feuchten Abluftdämpfen durch Adsorption an ein festes Adsorbens ist dadurch gekennzeichnet, dass man Nitrobenzol, Di- und/oder Trichlorbenzol enthaltende, bis zu 50 % relative Feuchtigkeit aufweisende Abluftdämpfe durch eine Schicht aus Kieselgelhaltigen Adsorbentien leitet, die Verbindungen darin adsorbiert und danach die Adsorbentien durch Austreiben der adsorbierten Verbindungen regeneriert.

Bei den abzutrennenden Verbindungen handelt es sich vorzugsweise um 1,2-Dichlorbenzol, 1,2,4-Trichlorbenzol und insbesondere Nitrobenzol, während als siliciumdioxydhaltige Verbindung in der Regel Kieselgel verwendet wird. Es ist als überraschend anzusehen, dass die Abluftdämpfe Feuchtigkeit enthalten können, ohne dass die Adsorption der genannten Verbindungen am Adsorbens beeinträchtigt wird. Erst bei hohen relativen Feuchtigkeitsgehalten der Abluftdämpfe z. B. von über 50 % beginnt die Konzentration von Nitrobenzol, Di- und/oder Trichlorbenzol beim Austritt aus der Adsorptionsschicht zu steigen. Im Falle zu hoher Feuchtigkeitswerte kann entweder eine Vortrocknung oder eine Erhöhung der Temperatur der Abluftdämpfe vorgenommen werden, um eine bevorzugte relative Feuchtigkeit von unter 50 %, vorzugsweise von 25 bis 40 %, zu erreichen.

Als Kieselgel (Silicagel, Aktivkieselsäure) können die üblichen allgemein bekannten Vertreter dieser Stoffklasse eingesetzt werden. So kann man beispielsweise nicht geformtes, körniges Kieselgel einsetzen, aber auch Kieselgel in Pulverform. Vorzugsweise wird jedoch geformtes Kieselgel verwendet, insbesondere Kieselgel in Perlform und mechanisch geformtes Kieselgel. Besonders bevorzugt sind derartige Kieselgelarten, wenn sie noch Anteile an beispielsweise 1 bis 20 % Metalloxyden enthalten, wie Magnesiumoxyd, Zirkonoxyd, Thoriumoxyd, Titanoxyd und Eisenoxyd. Ganz besonders gute Ergebnisse erhält man, wenn man Kieselgel in Perlform oder mechanisch geformtes Kieselgel verwendet, das $Al_2O_3$ enthält, beispielsweise 2 bis 18 %, vorzugsweise etwa 3 % $Al_2O_3$. Die letztgenannten Kieselgelarten haben im erfindungsgemässen Verfahren den grossen Vorteil, dass sie bei der Regeneration mit Wasserdampf keinen Abrieb erleiden, während man bei den meisten übrigen Kieselgelarten mit einem gewissen Abrieb bei der Wasserdampfregenerierung rechnen muss. Ausserdem weisen die genannten geformten Kieselgele mit Metalloxydgehalt, vorzugsweise $Al_2O_3$-Gehalt, ein sehr günstiges Verhältnis Beladung zu Restbeladung, das heisst eine hohe Aufnahmekapazität für die zu adsorbierenden Verbindungen auf.

Obwohl auch weitporige Kieselgele im erfindungsgemässen Verfahren angewendet werden können, die üblicherweise Oberflächen von etwa 250-400 $m^2/g$ aufweisen, sind doch engporige Kieselgele

2

bevorzugt, das heisst solche, die Oberflächen von über 500 m²/g haben, beispielsweise solche zwischen 500 und 900 m²/g, da letztere eine wesentlich höhere Aufnahmekapazität für die zu adsorbierenden Verbindungen besitzen.

Viele Vertreter der vorstehend genannten Kieselgelarten sind im Handel erhältlich. Methoden zu ihrer Herstellung sind allgemein bekannt, z. B. aus Ullmann's Enzyklopädie der technischen Chemie, 3. Auflage (1964) Band 151, Seiten 716-725 und aus der dort zitierten Literatur.

Die Verwendung von Kieselgel zur Adsorption von in Abluftdämpfen enthaltenem Nitrobenzol, Di- und/oder Trichlorbenzol stellt einen weiteren Gegenstand der vorliegenden Erfindung dar.

Das erfindungsgemässe Verfahren kann in jeder technisch angewendeten oder aus der Literatur bekannten Apparatur durchgeführt werden, die eine Vorrichtung enthält, in der ein Gas durch ein festes Adsorbens strömen kann. Im einfachsten Fall besteht eine derartige Vorrichtung aus einer oder mehreren Schüttgutkolonnen, die das als Adsorptionsmittel dienende Kieselgel enthalten. Das zu reinigende Gas wird in der Regel von unten in die (erste) Schüttgutkolonne geleitet und, wenn mehrere dieser Kolonnen vorhanden sind, wird das oben austretende Gas der Reihe nach in derselben Weise durch die weiteren mit Kieselgel gefüllten Kolonnen geleitet. Um die Restmenge an Verbindungen im Gas nach dem Durchgang durch die Kolonne bzw. die weiteren Kolonnen festzustellen, wird nach jeder Kolonne vorzugsweise das Gas analytisch untersucht, beispielsweise mit Hilfe eines Hydrocarbon-Analyzers (FID). Ein Anstieg des Lösungsmittelgehaltes im Gasstrom zeigt die Sättigung des Adsorptionsmittels an.

Zur Regenerierung des Kieselgel-Adsorptionsmittels verwendet man vorzugsweise heisses Wasser (Wasserdampf) oder auch heisse Luft. Im Falle der keinen Abrieb erleidenden Kieselgelarten (siehe oben) wird die Heisswasserregeneration bevorzugt angewendet. Im Falle von nicht abriebfesten Kieselgelarten kann mit Heissluft regeneriert werden.

Die mit Wasserdampf ausgetriebenen Verbindungen können einfach durch Phasentrennung vom Regeneriermittel (Wasser) abgetrennt werden. Zur Regenerierung wird der Wasserdampf vorteilhaft von oben nach unten durch die jeweilige Schüttgutkolonne geleitet. Das Wasser und die Verbindungen werden dann am unteren Ende abgezogen.

Wird Heissluft als Regenerationsmittel verwendet, kann diese vorteilhaft ebenfalls von oben nach unten durch die Schüttgutkolonne geleitet werden. Die unten austretenden Substanzen werden dann in einem Kühler auskondensiert.

Je nach der in der zu reinigenden Abluft enthaltenen Feuchtigkeit empfiehlt es sich, das Kieselgel-Adsorptionsmittel nach einigen Beladungszyklen zu trocknen, wobei es nicht nötig ist, das Kieselgel völlig zu entwässern. Eine Trocknung verbessert jedenfalls die Aufnahmekapazität des Adsorptionsmittels.

Das nachfolgende Beispiel erläutert das erfindungsgemässe Verfahren weiter, ohne es darauf zu beschränken. Teile und Prozente sind jeweils, ebenso wie in der Beschreibung und in den Ansprüchen, Gewichtsteile und Gewichtsprozente, sofern nichts anderes angegeben ist.

Beispiel

Für die Adsorptionsversuche wird eine Schüttgutkolonne von 40 mm Durchmesser und einer Höhe von 500 mm verwendet. Das jeweilige Adsorptionsmittel wird darin bis zu einer Höhe von 400 mm eingefüllt. Der Gasdurchsatz beträgt 1 600 l/h.

Als Adsorptionsmittel werden verwendet :

1. Silicagel M der Firma Fluka AG. Masse der Füllung : 326,5 g. Spezifische Oberfläche : 500 bis 800 m²/g. Ergebnisse siehe Tabellen 1 und 2.

2. Trockenperlen WS der Firma Kali-Chemie. Dieses geformte Kieselgel setzt sich aus 97 % $SiO_2$ und 3 % $Al_2O_3$ zusammen. Masse der Füllung : 320,8 g. Spezifische Oberfläche : 650 m²/g. Ergebnisse siehe Tabelle 3.

Zu Vergleichszwecken werden auch zwei Aktivkohlearten in die Versuche mit einbezogen :

3. Aktivkohle® Desorex F30. Masse der Füllung : 150 g. Spezifische Oberfläche : 1 250 m²/g. Ergebnisse siehe Tabelle 4.

4. Aktivkohle® Norit PK. Masse der Füllung : 89,4 g. Spezifische Oberfläche : 700 m²/g. Ergebnisse siehe Tabelle 5.

Versuchsdurchführung

a) Adsorption

Mit Nitrobenzol gesättigte Abluft wird bei Raumtemperatur von unten nach oben durch die mit dem jeweiligen Adsorptionsmittel gefüllte Schüttgutkolonne geleitet. Der Gasaustritt wird mit einem Hydrocarbon-Analyzer (FID) überwacht. Bei einem Anstieg der Konzentration beim Austritt des Gases aus der Schüttgutkolonne auf über 40 ppm $CH_4$ wird der Versuch abgebrochen. Es wird jedoch festgestellt, dass sich adsorbiertes Nitrobenzol nicht durch Luftfeuchtigkeit verdrängen lässt.

Jeweils vor der ersten Beladung wird das Adsorptionsmittel im Heizschrank getrocknet und anschliessend im Exsikkator abgekühlt. Das Adsorptionsmittel wird viermal bzw. fünfmal beladen.

b) Regeneration

Regeneration mit Wasserdampf (Heisswasserregeneration) :
Während einer Stunde wird Wasserdampf von oben nach unten durch die Kolonne geleitet. Dabei wird die Aussenwand der Schüttgutkolonne ebenfalls mit Dampf beheizt, um Wärmeverluste zu vermeiden. In einem Kühler wird das Dampf-Nitrobenzol-Gemisch kondensiert. Zum Schluss wird während 10 Minuten zur Trocknung und Abkühlung das Adsorptionsmittel bei Raumtemperatur von unten nach oben Luft durch die Kolonne geleitet. Anschliessend wird das Adsorbens wieder zur Adsorption des Nitrobenzols aus der Abluft eingesetzt.

Nach viermaligem bzw. fünfmaligen Beladen und Regenerieren wird das Adsorptionsmittel aus der Kolonne herausgeholt und im Exsikkator getrocknet.

Die Gewichtsdifferenz zur eingesetzten Menge Adsorbens ergibt die Restbeladung. Die Beladung wird aus dem Restgehalt an Nitrobenzol auf dem Adsorptionsmittel und der Menge an kondensiertem (zurückgewonnenem) Nitrobenzol bestimmt.

Regeneration mit Heissluft :
Diese Art der Regeneration wird bei Silicagel M angewendet, weil das Silicagel bei der Behandlung mit Wasserdampf einen gewissen Abrieb zeigt.

Durch den Doppelmantel der Schüttgutkolonne wird Heizflüssigkeit geleitet und damit der Kolonneninhalt erwärmt. Von oben nach unten wird Luft durch die Kolonne geleitet und das unten austretende Nitrobenzol in einem Kühler auskondensiert.

Die weitere Behandlung des Adsorptionsmittels erfolgt wie bei der Wasserdampfregeneration beschrieben.

Die aus den vorstehend beschriebenen Versuchen erhaltenen Ergebnisse sind den nachfolgenden Tabellen 1 bis 5 zu entnehmen.

Tabelle 1 (Adsorptionsmittel : Silicagel M, Regeneration : Wasserdampf)

| Versuch Nr. | Adsorptions- dauer (h) | Konzentration an Nitrobenzol $(mg/m^3)$ | | Dampfkon- densat (g) aus Regene- ration | Nitrobenzol (g) regeneriert | Verhält- nis Dampf- menge: Nitroben- zol |
|---|---|---|---|---|---|---|
| | | Eintr. | Austr. | | | |
| 1 | 48 | 1800 | <20 | 260 | 78 | 3,3 |
| 2 | 33 | 1800 | <20 | 320 | 66 | 4,85 |
| 3 | 28 | 1800 | <20 | 250 | 84 | 3,0 |
| 4 | 35 | 1800 | <20 | 355 | 67 | 5,3 |

Beladung     : 36,5 %
Restbeladung : 13,9 %
Differenz    : 22,6 %

(Siehe Tabelle 2 Seite 5 f.)

4

Tabelle 2 (Adsorptionsmittel : Silicagel M, Regeneration : Heissluft)

| Ver- such Nr. | Adsorp- tions- dauer (h) | Konzentration an Nitrobenzol $(mg/m^3)$ | | Regeneration: Temp. in Kolonne (°C) | Zeit (h) | Träger- luft (1/h) | Nitrobenzol (g) kondensiert | |
|---|---|---|---|---|---|---|---|---|
| | | Eintr. | Austr. | | | | | total |
| 1 | 88 | 1450 | 16,5 | 170 | 16 | – | 23,4 | – |
| | | | | 170 | 10 | 5 | 51,8 | 75,2 |
| 2 | 54 | 1720 | 16,5 | 150 | 2,5 | 50 | 65,6 | – |
| | | | | 150 | 1,0 | 150 | 14,4 | 80,0 |
| 3 | 27 | 1907 | 91,7 | 135 | 1,5 | 150 | 49,4 | 49,4 |
| 4 | 27 | 1338 | 91,7 | 145 | 1,5 | 150 | 60,2 | 60,2 |
| 5 | 37 | 1142 | 71,3 | 145 | 1,5 | 150 | 55,9 | 55,9 |

Beladung : 36,9 %
Restbeladung : 20,6 %
Differenz : 16,3 %

Tabelle 3 (Adsorptionsmittel : Trockenperlen WS. Regeneration : Wasserdampf)

| Versuch Nr. | Adsorp- tions- dauer (h) | Konzentration an Nitrobenzol $(mg/m^3)$ | | Dampfkon- densat (g) aus Rege- neration | Nitrobenzol (g) regeneriert | Verhältnis Dampfmenge: Nitrobenzol |
|---|---|---|---|---|---|---|
| | | Eintr. | Austr. | | | |
| 1 | 50,5 | 1800 | < 20 | 227 | 75,6 | 3,0 |
| 2 | 27,5 | 1800 | < 20 | 223 | 62,4 | 3,6 |
| 3 | 28 | 1800 | < 20 | 219 | 67,2 | 3,26 |
| 4 | 27 | 1800 | < 20 | 268 | 74,4 | 3,6 |

Beladung : 47,5 %
Restbeladung : 25,7 %
Differenz : 21,8 %

Tabelle 4 (Adsorptionsmittel : Aktivkohle[R] Desorex F30. Regeneration : Wasserdampf)

| Versuch Nr. | Adsorp- tions- dauer (h) | Konzentration an Nitrobenzol $(mg/m^3)$ | | Dampfkon- densat (g) aus Rege- neration | Nitrobenzol (g) regeneriert | Verhältnis Dampfmenge: Nitrobenzol |
|---|---|---|---|---|---|---|
| | | Eintr. | Austr. | | | |
| 1 | 36 | 1800 | < 20 | 400 | 32,4 | 12,3 |
| 2 | 16 | 1800 | < 20 | 350 | 36,8 | 9,7 |
| 3 | 14 | 1800 | < 20 | 300 | 32,4 | 9,3 |
| 4 | 14 | 1800 | < 20 | 300 | 32,4 | 9,3 |

Beladung : 68,5 %
Restbeladung : 50,2 %
Differenz : 18,3 %

Tabelle 5 (Adsorptionsmittel : Aktivkohle<sup>R</sup> Norit PK. Regeneration : Wasserdampf)

| Versuch Nr. | Adsorptions- dauer (h) | Konzentration an Nitrobenzol $(mg/m^3)$ | | Dampfkon- densat (g) aus Rege- neration | Nitrobenzol (g) regeneriert | Verhältnis Dampfmenge: Nitrobenzol |
|---|---|---|---|---|---|---|
| | | Eintr. | Austr. | | | |
| 1 | 17 | 1800 | < 20 | 305 | 24 | 12,7 |
| 2 | 8 | 1800 | < 20 | 205 | 18 | 11,4 |
| 3 | 8,5 | 1800 | < 20 | 96 | 9 | 10,8 |
| 4 | 4,5 | 1800 | < 20 | 239 | 16 | 14,9 |

Beladung      : 48,9 %
Restbeladung : 30,0 %
Differenz      : 18,9 %

Tabelle 6 : Vergleich der verschiedenen geprüften Adsorptionsmittel

| Adsorptions- mittel | einge- setzte Menge (g) | spez.Ober- fläche des Adsorp- tionsmit- tels$(m^2/g)$ | Bela- dung % | Rest- bela- dung % | Differenz Beladung -Restbela- dung % | Verhältnis Dampfmenge: Nitrobenzol |
|---|---|---|---|---|---|---|
| Aktivkohle ® Desorex F 30 | 150 | 1250 | 68,5 | 50,2 | 18,3 | 10,1 |
| Aktivkohle ® Norit PK | 89,4 | 700 | 48,9 | 30,0 | 18,9 | 12,5 |
| Silicagel M | 326,4 | 500–800 | 36,5 | 13,9 | 22,6 | 4,1 |
| Trockenper- len WS | 320,8 | 650 | 47,5 | 25,7 | 21,8 | 3,4 |

Aus der Tabelle 6 geht hervor, dass die aus Kieselgel bestehenden Adsorptionsmittel neben sicherheitstechnischen Vorteilen auch noch eine grössere Differenz Beladung-Restbeladung, also eine grössere Kapazität sowie ein wesentlich günstigeres Verhältnis zwischen zur Regeneration eingesetzter Wasserdampfmenge und regeneriertem Nitrobenzol (d. h. es ist zur Regeneration wesentlich weniger Wasserdampf nötig) aufweisen, wenn sie mit bekannten Aktivkohle-Adsorbentien verglichen werden.

Wiederholt man das vorstehende Beispiel mit 1,2-Dichlorbenzol und mit 1,2,4-Trichlorbenzol enthaltender Abluft, so kommt man zu ähnlichen Ergebnissen, wie die nachfolgenden Tabellen 7 bis 10 zeigen.

Tabelle 7 :  1,2-Dichlorbenzol (Adsorptionsmittel : Trockenperlen WS. Regeneration : Wasserdampf)

| Ver- such Nr. | Adsorp- tions- dauer (h) | Konzentration an 1,2-Dichlor- benzol (mg/m$^3$) Eintr. | Austr. | Dampfkon- densat (g) aus Regene- ration | 1,2-Dichlor- benzol (g) regeneriert | Verhältnis Dampfmenge: 1,2-Dichlor- benzol |
|---|---|---|---|---|---|---|
| 1 | 5,5 | 3550 | 10 | 145 | 26 | 5,6 |
| 2 | 3,0 | 3580 | 8/27 [1] | 120 | 14,3 | 10,9 |
| 3 | 3,5 | 3200 | 8/20 [2] | 75 | 13,0 | 5,8 |

Beladung      : 10,45 %     1) bis auf 340 mg/m$^3$
Restbeladung :  5,0 %       2) bis auf 290 mg/m$^3$ ansteigen
Differenz     :  5,45 %

Tabelle   8 :  1,2-Dichlorbenzol   (Adsorptionsmittel :   Aktivkohle[a]   Desorex   F   30.   Regeneration :
Wasserdampf)

| Ver- such Nr. | Adsorp- tions- dauer (h) | Konzentration an 1,2-Dichlor- benzol (mg/m$^3$) Eintr. | Austr. | Dampfkon- densat (g) aus Regene- ration | 1,2-Dichlor- benzol (g) regeneriert | Verhältnis Dampfmenge! 1,2-Dichlor- benzol |
|---|---|---|---|---|---|---|
| 1 | 26,5 | 3200 | <20 | 580 | 43 | 13,5 |
| 2 | 7 | 3200 | <20 | 460 | 37 | 12,4 |
| 3 | 8 | 3200 | <20 | 320 | 34 | 9,4 |
| 4 | 7 | 3200 | <20 | 453 | 38 | 11,9 |

Beladung      : 67,4 %
Restbeladung : 47,2 %
Differenz     : 20,2 %

Tabelle 9 :  1,2,4-Trichlorbenzol (Adsorptionsmittel : Trockenperlen WS. Regeneration : Wasserdampf)

| Ver- such Nr. | Adsorp- tions- dauer (h) | Konzentration an 1,2,4-Trichlor- benzol (mg/m$^3$) Eintr. | Austr. | Dampfkon- densat (g) aus Regene- ration | 1,2,4-Trichlor benzol (g) regeneriert | Verhältnis Dampfmenge: 1,2,4-Tri- chlorbenzol |
|---|---|---|---|---|---|---|
| 1 | 48 | 2000 | 20 | 174 | 108,5 | 1,6 |
| 2 | 26 | 2000 | 20 | 218 | 89,7 | 2,4 |
| 3 | 24 | 2000 | 20 | 214 | 88,3 | 2,2 |
| 4 | 27 | 2000 | 20 | 256 | 85,3 | 3,0 |

Beladung      : 47  %
Restbeladung : 19,2 %
Differenz     : 27,8 %

Tabelle 10 : 1,2,4-Trichlorbenzol (Adsorptionsmittel : Aktivkohle⁸ Desorex F 30. Regeneration : Wasserdampf)

| Ver-such Nr. | Adsorp-tions-dauer (h) | Konzentration an 1,2,4-Tri-chlorbenzol (mg/m³) | | Dampfkon-densat (g) aus Regene-ration | 1,2,4-Trichlor-benzol (g) regeneriert | Verhältnis Dampfmenge: 1,2,4-Tri-chlorbenzol |
|---|---|---|---|---|---|---|
| | | Eintr. | Austr. | | | |
| 1 | 72 | 1900 | 23 | 700 | 47,7 | 14,6 |
| 2 | 24 | 1900 | 20 | 210 | 33 | 6,4 |
| 3 | 18 | 1900 | 20 | 200 | 30,4 | 6,6 |
| 4 | 19 | 1900 | 20 | 212 | 27,6 | 5,4 |

Beladung : 85 %
Restbeladung : 61 %
Differenz : 24 %

Tabelle 11

Einfluss von Luftfeuchtigkeit auf die Adsorption von Nitrobenzol an KC Trockenperlen WS. Regeneration
mit Wasserdampf

| Adsorptions-temperatur (°C) | Feuchtigkeit relativ. (%) | absolut (g $H_2O/m^3$) | Konzentration an Nitrobenzol $(mg/m^3)$ Eintr. | Austr. | Beladung Nitrobenzol (%) | Restbeladung Nitrobenzol (%) | Differenz (%) | Verhältnis Dampfmenge: Nitrobenzol |
|---|---|---|---|---|---|---|---|---|
| 20 | 0 | 0 | 1820 | 10 | 41,6 | 18,2 | 23,4 | 4,3 |
| 20 | 25 | 4,3 | 1933 | 10 | 42,1 | 16,6 | 25,5 | 3,7 |
| 20 | 50 | 8,7 | 2060 | 80 | 30,6 | 13,8 | 16,8 | 4,0 |
| 25 | 0 | 0 | 1785 | 5 | 37,8 | 14,5 | 23,3 | 4,3 |
| 25 | 25 | 5,8 | 2127 | 8 | 36,6 | 13,2 | 23,4 | 5,7 |
| 25 | 50 | 11,5 | 2255 | 30 | 35,4 | 14,8 | 20,6 | 5,6 |
| 30 | 0 | 0 | 2420 | 8 | 38,2 | 19,0 | 19,2 | 4,4 |
| 30 | 25 | 7,6 | 2630 | 11 | 35,4 | 14,8 | 20,6 | 5,1 |
| 30 | 40 | 12,3 | 2412 | 13 | 33,3 | 13,4 | 19,9 | 5,6 |
| 30 | 50 | 15,2 | 2690 | 43 | 31,5 | 11,2 | 20,3 | 5,9 |

**Ansprüche**

1. Verfahren zur Abtrennung von Nitrobenzol, Di- und/oder Trichlorbenzol aus feuchten Abluftdämpfen durch Adsorption an ein festes Adsorbens, dadurch gekennzeichnet, dass man Nitrobenzol, Di- und/oder Trichlorbenzol enthaltende, bis zu 50 % relative Feuchtigkeit aufweisende Abluftdämpfe durch eine Schicht aus kieselgelhaltigen Adsorbentien leitet, die Verbindungen adsorbiert und danach die Adsorbentien durch Austreiben der adsorbierten Verbindungen regeneriert.

2. Verfahren gemäss Anspruch 1, dadurch gekennzeichnet, dass man die Abluftdämpfe durch eine Schicht aus Kieselgel mit einem Gehalt von 1 bis 20 Gew.-% an Metalloxyden leitet.

3. Verfahren gemäss Anspruch 2, dadurch gekennzeichnet, dass man die Abluftdämpfe durch eine Schicht aus Kieselgel mit einem Gehalt von 2 bis 18 Gew.-% Aluminiumoxyd leitet.

4. Verfahren gemäss Anspruch 1, dadurch gekennzeichnet, dass man die Abluftdämpfe durch eine Schicht aus engporigem Kieselgel mit einer Oberfläche von mindestens 500 m$^2$/g leitet.

5. Verfahren gemäss Anspruch 1, dadurch gekennzeichnet, dass man die Abluftdämpfe durch eine Schicht aus perlförmigem Kieselgel leitet.


**Claims**

1. A process for recovering nitrobenzene, dichlorobenzene and/or trichlorobenzene from moist exhaust gases by adsorption on a solid adsorbent, which process comprises passing said exhaust gases containing these compounds and having a relative humidity of up to 50 % through a layer of silica-containing adsorbents, adsorbing said compounds, and subsequently regenerating the adsorbents by removing the sorbed compounds therefrom.

2. A process according to claim 1, wherein the exhaust gases are passed through a layer of silica gel containing 1 to 20 % by weight of a metal oxide.

3. A process according to claim 2, wherein the exhaust gases are passed through a layer of silica gel containing 2 to 18 % of alumina.

4. A process according to claim 1, wherein the exhaust gases are passed through a layer of silica gel having a low pore volume and a specific surface area of at least 500 m$^2$/kg.

5. A process according to claim 1, wherein the exhaust gases are passed through a layer of silica gel beads.


**Revendications**

1. Procédé de séparation de nitrobenzène, di- et/ou trichlorobenzène des gaz effluents humides par adsorption sur un adsorbant solide, caractérisé par le fait que l'on fait passer les gaz effluents contenant le nitrobenzène, le di- et/ou trichlorobenzène et présentant une humidité relative allant jusqu'à 50 %, à travers une couche d'adsorbants contenant du gel de silice, que l'on adsorbe les composés et que, ensuite, on régénère les adsorbants par élimination des composés adsorbés.

2. Procédé selon la revendication 1, caractérisé par le fait que l'on fait passer les gaz effluents à travers une couche de gel de silice ayant une teneur de 1 à 20 % en poids en oxydes métalliques.

3. Procédé selon la revendication 2, caractérisé par le fait que l'on fait passer les gaz effluents à travers une couche de gel de silice ayant une teneur de 2 à 18 % en poids d'oxyde d'aluminium.

4. Procédé selon la revendication 1, caractérisé par le fait que l'on fait passer les gaz effluents à travers une couche de gel de silice à pores étroites ayant une surface d'au moins 500 m$^2$/g.

5. Procédé selon la revendication 1, caractérisé par le fait que l'on fait passer les gaz effluents à travers une couche de gel de silice en forme de perles.